# EUROPÄISCHE PATENTSCHRIFT

(11) **EP 0 658 056 B1**
(45) Veröffentlichungstag und Bekanntmachung des Hinweises auf die Patenterteilung: **09.06.1999**
(21) Anmeldenummer: 94119008.4
(22) Anmeldetag: 02.12.1994
(51) Int. Cl.: H04N 7/36, H04N 5/14

(54) **Verfahren zur hierarchischen Bewegungsschätzung in einem Fernsehsignal**
Method for hierarchical motion estimation in a television signal
Méthode pour estimation de mouvement hiérarchique pour un signal de télévision

(30) Priorität: 11.12.1993 DE 4342305
(43) Veröffentlichungstag der Anmeldung: 14.06.1995
(73) Patentinhaber: DEUTSCHE THOMSON-BRANDT GMBH, 78048 Villingen-Schwenningen (DE)
(72) Erfinder: Drexler, Michael, D-30966 Hemmingen (DE); Keesen, Heinz-Werner, D-30173 Hannover (DE); Herpel, Carsten, D-30171 Hannover (DE)
(74) Vertreter: Hartnack, Wolfgang, Dipl.-Ing.

(56) Entgegenhaltungen:
- EP-A- 0 460 997
- EP-A- 0 558 922
- SIGNAL PROCESSING OF HDTV, III, 4.September 1991 TURIN, IT, Seiten 233-240, XP 000379958 CHUPEAU 'Multiscale Motion Estimation'
- SIGNAL PROCESSING IMAGE COMMUNICATION., Bd. 5, Nr. 1/2, Februar 1993 AMSTERDAM NL, Seiten 159-184, XP 000345619 HANAMURA ET AL. 'Hierarchical Coding Scheme of Video Signal with Scalability and Compatibility'
- GLOBECOM '92, Bd. 1/3, 6.Dezember 1992 ORLANDO, FLA, Seiten 320-324, XP 000357803 LEE ET AL. 'A Fast Feature Matching Algorithm of Multi-Resolution Motion Estimation'

## Beschreibung

Die Erfindung geht aus von einem Verfahren gemäß dem Oberbegriff des Anspruchs 1. Eine derartige Bewegungsschätzung (sogenannte motion estimation) in einem Fernsehsignal dient insbesondere zur Datenreduktion, zur Einsparung von Übertragungsbandbreite, Übertragungszeit oder Speicherkapazität bei einem Recorder. Entsprechend dem Ergebnis der Bewegungsschätzung werden dabei nicht wie beim üblichen Fernsehsignal aufeinanderfolgende Bilder vollständig, sondern Differenzfaktoren übertragen, die eine Änderung zwischen aufeinanderfolgenden Bildern darstellen. Eine weitere Anwendung der Bewegungsschätzung liegt darin, bestimmte Signalverarbeitungsschaltungen wie z.B. Kammfilter in ihrer Wirkungsweise in Abhängigkeit von der Bewegung im Fernsehsignal umzuschalten. Eine Bewegungsschätzung ist auch erforderlich bei Videokameras, in denen durch unbeabsichtigtes Wackeln der Kamera auftretende ruckartige Änderungen im Bild mechanisch oder elektronisch ausgeglichen werden.

Die Bewegungsschätzung zwischen Videobildern ist um so effektiver, je größer der Suchbereich ist. Zur Bewältigung des damit verbundenen Hardwareaufwands geht man zu hierarchischen Strukturen über. Dabei wird zuerst im kompletten Suchbereich relativ grob ein bester Bewegungsvektor gesucht, um dann jeweils um die gefundene Stelle herum feiner aufgelöst den Vektor zu verbessern.

Bei der bekannten Bewegungsschätzung nach dem "block matching algorithm" wird ein zu bearbeitendes Videobild in Blöcke fester Größe unterteilt. Für jeden Block wird die Bewegung bezüglich eines zweiten Videobilds ermittelt, indem für jede mögliche Verschiebung innerhalb eines Suchbereichs eine Fehlergröße (Verzerrung) des Blocks errechnet und anschließend das Minimum der Werte ermittelt wird.

Die Realisierung in Hardware stützt sich dabei auf am Markt befindliche Motion Estimation Chips, wie z.B. STI3220̸ von SGS-Thomson. Dieser Baustein berechnet in einem Suchbereich von -8/+7 horizontal und vertikal die Verschiebung mit der geringsten Verzerrung. Durch Kaskadierung mehrerer Chips kann der Suchbereich vergrößert werden. Für das hochauflösende HDTV-System einerseits und Videobilder nach dem MPEG-Standard, bei dem die Bewegung zwischen zeitlich weiter auseinanderliegenden Bildern berechnet wird, andererseits, will man möglichst große Suchbereiche für die Bewegungsschätzung verwenden und dabei Verschiebungen mit 1/2 pel-Auflösung ermitteln (pel = Pixel = Bildpunkt). Bei "full search block matching", bei der jede mögliche Verschiebung ein paralleles Rechenwerk bedeutet, wird selbst mit den integrierten Motion Estimation Chips eine Anzahl von mehreren hundert Bausteinen benötigt.

Durch die hierarchische Bewegungsschätzung kann der Hardwareaufwand verringert werden. Hierbei wird in einem ersten Schritt der gesamte Suchbereich mit verringerter Auflösung untersucht. Um die Stelle der geringsten Verzerrung wird dann anschließend mit höherer Auflösung erneut der kleinste Verzerrungseffekt ermittelt. Dieses Verfahren läßt sich beliebig wiederholen mit immer feiner werdender Auflösung.

Der Erfindung liegt die Aufgabe zugrunde, den für eine derartige Bewegungsschätzung erforderlichen Schaltungsaufwand, die sogenannte Hardware, zu verringern. Diese Aufgabe wird durch die im Anspruch 1 angegebene Erfindung gelöst. Vorteilhafte Weiterbildungen der Erfindung sind in den Unteransprüchen angegeben.

Bei der Erfindung werden somit in der unteren feiner auflösenden Hierarchiestufe einander nicht überlappende Bereiche geschaffen, und die Schwerpunkte dieser Bereiche werden als Berechnungspunkte in einer höher liegenden Hierarchiestufe verwendet. Vorzugsweise werden in den einander nicht überlappenden Bereichen Punkte untersucht, die zwischen den Zeilen liegen und keine echten Bildpunkte in dem Zeilenraster darstellen.

Die Erfindung wird im folgenden anhand der Zeichnung erläutert. Darin zeigen
- Fig. 1: ein Beispiel für eine bekannte Bewegungsschätzung,
- Fig. 2: im Prinzip die erfindungsgemäße Bewegungsschätzung,
- Fig. 3: ein Beispiel für eine 4-pel Auflösung in einer oberen Hierarchiestufe und
- Fig. 4: ein Beispiel zur Berechnung gefilterter Werte.

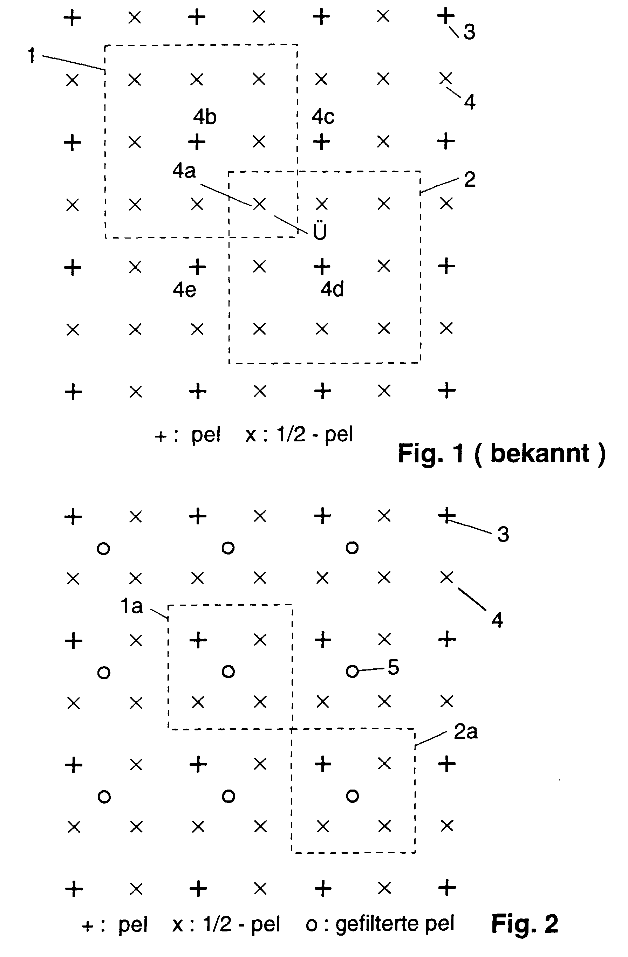

Fig. 1 zeigt zwei Blöcke 1, 2, die einen Überlappungsbereich Ü aufweisen. Bei der Bewegungsschätzung werden zunächst in einer ersten Hierarchiestufe nur die stark gezeichneten Kreuze 3 untersucht. Wenn z.B. der Punkt 4a optimal erscheint, würde man somit nur die diesen Punkt umgebenden Punkte 4b, 4c, 4d, 4e finden. Das führt dazu, daß man dann um diese Punkte herum eine Auswertung durchführen muß. Wie Fig. 1 zeigt, sind das jeweils in einem der Blöcke 1, 2 acht Punkte, dargestellt durch die schwach gezeichneten Kreuze 4. In der zweiten Hierarchiestufe muß also der Schaltungsaufwand für diese acht Punkte bemessen sein. Fig. 1 zeigt somit ein Beispiel für eine erste Suche mit Bildpunkt (pel)-Auflösung und anschließender Suche mit 1/2 pel-Auflösung um den zuerst gefundenen pel herum. Es ist ersichtlich, daß sich die 1/2 pel-Suchbereiche um einen pel-Wert herum überlappen. Jeder 1/2 pel-Wert gehört zu mindest zwei hierarhischen Suchbereichen, die Diagonalen 1/2-pel gehören dabei sogar zu vier Suchbereichen.

In Fig. 2 haben die Blöcke la und 2a keinen Überlappungsbereich mehr. Jeder Punkt gehört somit eindeutig zu einem Punkt in der obersten Kategorie. In der ersten Hierarchiestufe werden die durch die Kreise dargestellten Punkte 5 untersucht, also im Gegensatz zu Fig. 1 nicht die durch die Kreuze dargestellten Punkte 3. Danach werden jeweils in der zweiten Hierarchiestufe vier Punkte um die Punkte 5 herum untersucht. Es ist ersichtlich, daß nunmehr nur noch vier Punkte untersucht werden müssen und nicht acht wie in Fig. 1. Der Schaltungsaufwand oder die Hardware wird somit etwa um diesen Faktor verringert. Die Punkte 5 sind keine wirklichen Bildpunkte mehr, da sie außerhalb des in Fig. 1 dargestellten Zeilenrasters liegen. Der Schaltungsauwand für die Ermittlung dieser Punkte 5 ist jedoch relativ gering. Er besteht lediglich in einem Filter, in dem die Werte dieser Punkte addiert werden und die dadurch entstehende Summe durch 4 geteilt wird. Es wird also eine echte Mittelwertbildung dieser vier Punkte durchgeführt. In der ersten Hierarchiestufe werden also nicht mehr die originalen pel-Werte benutzt, sondern gefilterte pel-Werte. Im zweiten Hierarchieschritt sucht man nun um diese gefilterten Werte herum.

Das Verfahren kann auch bei mehrstufigen hierarchischen Verfahren zur Anwendung gelangen.

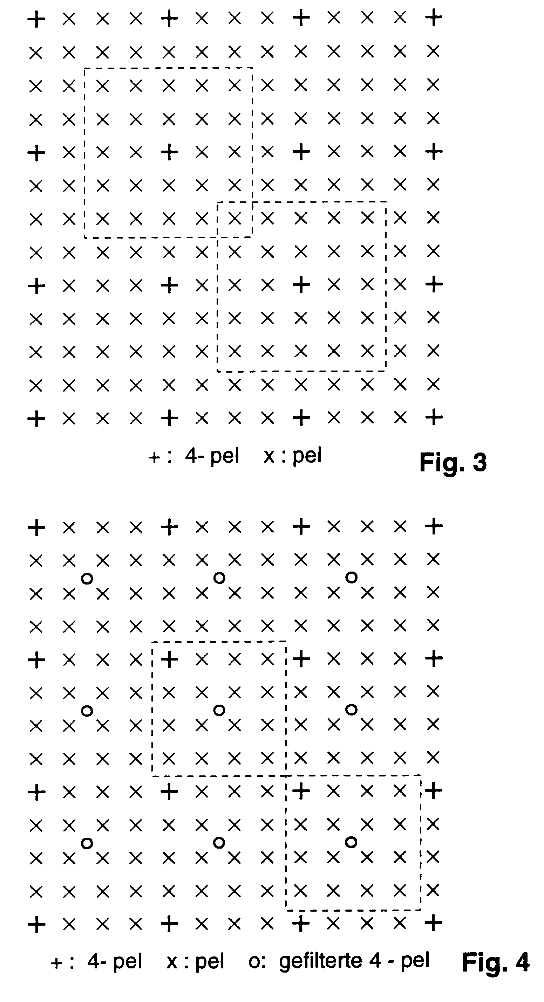

Fig. 3 zeigt ein Beispiel für eine 4-pel-Auflösung in einer oberen Hierarchiestufe und anschließender pel-Auflösung nach dem herkömmlichen Verfahren. In der unteren Hierarchiestufe müssen hier 24 Positionen berechnet werden.

Fig. 4 zeigt demgegenüber wieder die Ausführung mit einander nicht überlappenden Blöcken. In der oberen Hierarchiestufe werden gefilterte 4-pel-Werte berechnet, die im Schwerpunkt der Bereiche liegen. Anschließend wird um den gefundenen gefilterten 4-pel Wert mit der geringsten Verzerrung herum gesucht, wobei jetzt nur noch 16 Positionen in Frage kommen.

Das erfindungsgemäße Verfahren ist nicht auf die Bewegungsschätzung beschränkt, sondern kann überall da Anwendung finden, wo hierarchische Strukturen sinnvoll sind. Es werden jeweils in der unteren feiner aufgelösten Hierarchiestufe einander nicht überlappende Bereiche geschaffen, und die Schwerpunkte dieser Bereiche werden als Berechnungspunkte in der Stufe darüber benutzt.

## Patentansprüche

1. Verfahren zur hierarchischen Bewegungsschätzung in einem Fernsehsignal, bei dem das Videobild in Blöcke fester Größe unterteilt und für jeden Block die Bewegung relativ zu einem zweiten Videobild ermittelt wird, **dadurch gekennzeichnet**, daß in der unteren feiner auflösenden Hierarchiestufe einander nicht überlappende Bereiche geschaffen und die Schwerpunkte dieser Bereiche als Berechnungspunkte in einer höher liegenden Hierarchiestufe verwendet werden.

2. Verfahren nach Anspruch 1, **dadurch gekennzeichnet**, daß in den einander nicht überlappenden Bereichen Punkte untersucht werden, die zwischen den Zeilen liegen und keine echten Bildpunkte in dem Zeilenraster darstellen.

## Claims

1. Method for hierarchical motion estimation in a television signal, in which the video image is subdivided into blocks of fixed size, and the motion relative to a second video image is determined for each block, characterized in that areas which do not overlap one another are created in the lower, more finely resolving hierarchy stage, and the centroids of these areas are used as calculating points in a higher hierarchy stage.

2. Method according to Claim 1, characterized in that in the areas which do not overlap one another points are investigated which are situated between the lines and are not true pixels in the line-scanning pattern.

## Revendications

1. Méthode pour estimation de mouvement hiérarchique pour un signal de télévision, dans laquelle l'image vidéo est divisée en blocs de grandeur fixe et pour chaque bloc le mouvement est détecté par rapport à une deuxième image vidéo, **caractérisée en ce que** dans l'étage hiérarchique inférieur de définition plus fine, des domaines ne se chevauchant pas sont créés, et les barycentres de ces domaines sont utilisés comme points de calcul dans un étage hiérarchique supérieur.

2. Méthode selon la revendication 1, **caractérisée en ce que** dans les domaines ne se chevauchant pas, des points qui sont situés entre les lignes et ne représentent pas de réels éléments d'image dans la trame de lignes sont examinés.
